# EUROPÄISCHE PATENTSCHRIFT

(11) **EP 1 140 553 B1**
(45) Veröffentlichungstag und Bekanntmachung des Hinweises auf die Patenterteilung: **01.12.2004**
(21) Anmeldenummer: 00963975.8
(22) Anmeldetag: 07.09.2000
(51) Int. Cl.: B60N 2/02

(54) **ANTRIEBSVORRICHTUNG ZUM VERSTELLEN VON ZU EINEM KRAFTFAHRZEUG GEHÖRENDEN EINRICHTUNGSTEILEN**
DRIVE DEVICE FOR DISPLACING ELEMENTS PERTAINING TO A VEHICLE
DISPOSITIF D'ENTRAINEMENT POUR DEPLACER DES ELEMENTS D'UNITES FAISANT PARTIE D'UN VEHICULE AUTOMOBILE

(30) Priorität: 28.10.1999 DE 19951978
(43) Veröffentlichungstag der Anmeldung: 10.10.2001
(73) Patentinhaber: ROBERT BOSCH GMBH, 70442 Stuttgart (DE)
(72) Erfinder: URSEL, Eckhard, 77815 Bühl (DE); MAENNLE, Erik, 77704 Oberkirch (DE)
(86) Internationale Anmeldenummer: PCT/DE2000/003093
(87) Internationale Veröffentlichungsnummer: WO 2001/030603

(56) Entgegenhaltungen:
- FR-A- 2 768 973
- US-A- 5 092 197
- US-A- 5 103 691
- US-A- 5 467 957

## Beschreibung

### Stand der Technik

Die Erfindung betrifft eine Antriebsvorrichtung zum Verstellen von zu einem Kraftfahrzeug gehörenden Einrichtungsteilen, insbesondere von Teilen eines Kraftfahrzeugsitzes, nach der Gattung des Hauptanspruchs.

Es sind schon Antriebsvorrichtungen bekannt, die es erlauben, verschiedene Einrichtungsteile eines Kraftfahrzeuges mit nur einem Motor zu verstellen. Je nach Anzahl der zu verstellenden Einrichtungsteile wird dazu eine entsprechende Anzahl von Kupplungen eingesetzt, die eine unabhängige Bewegung dieser Einrichtungsteile ermöglichen.

So zeigt beispielsweise die US 5,103,691 (dem Oberbegriff entsprechend) eine Vorrichtung mit einem Motor, dessen Abtriebsmoment über eine Abtriebswelle auf vier verschiedene Antriebswellen übertragen wird. Dabei kann jede einzelne der vier Antriebswellen unabhängig von den anderen mittels jeweils eines eigenen Kupplungsaktuators in Wirkverbindung mit der Abtriebswelle des Motors gebracht werden.

Nachteilig dabei ist, dass jede einzelne Kupplung von einem separaten Kupplungsaktuator betätigt werden muss. Dies ist ein hoher materieller Aufwand, der nicht nur Kosten verursacht, sondern auch eine hohe Komplexität derartiger Antriebsvorrichtungen nach sich zieht.

### Vorteile der Erfindung

Die erfindungsgemäße Antriebsvorrichtung zum Verstellen von zu einem Kraftfahrzeug gehörenden Einrichtungsteilen mit den Merkmalen des Hauptanspruchs hat nicht nur den Vorteil, daß verschiedene Abtriebsteile von einem einzigen elektrischen Antriebsmotor angetrieben werden können, sondern auch den entscheidenden weiteren Vorteil, daß die dazu nötigen, verschiedenen Kupplungen von lediglich einem Kupplungsaktuator aus bedient werden können.

Somit entfällt die Notwendigkeit pro Kupplung je einen Kupplungsaktuator einzusetzen, was mit deutlichen Gewichts- und Kostenvorteilen verbunden ist. Darüberhinaus läßt sich die Antriebsvorrichtung sehr kompakt und relativ einfach bauen, was einen weiteren Vorteil darstellt. Erfindungsgemäß weist die Abtriebseinheit eine mit dem Kupplungsaktuator und den mindestens zwei Kupplungen zusammenwirkende Kupplungsbetätigungswelle zum wahlweisen Betätigen der mindestens zwei Kupplungen auf. Dies ermöglicht in technisch sehr einfacher Form das wahlweise Betätigen bzw. Bedienen der einzelnen Kupplungen über den zentralen Kupplungsaktuator. Darüber hinaus weist die Kupplungsbetätigungswelle Nocken zum wahlweisen Betätigen der mindestens zwei Kupplungen auf.

Durch die in den Unteransprüchen angegebenen Maßnahmen sind vorteilhafte Weiterbildungen der Vorrichtung nach dem Hauptanspruch möglich.

So ist es von Vorteil , wenn die Nocken der Kupplungsbetätigungswelle beispielsweise bei drei Kupplungen um jeweils 120° zueinander versetzt sind. Durch das Verstellen dieser Nocken können die einzelnen Kupplungen betätigt werden, sie stellen zusammen mit der Kupplungsbetätigungswelle eine Art verlängerten Arm des Kupplungsaktuators dar.

Die mindestens zwei Kupplungen weisen jeweils ein erstes Kupplungselement und ein zweites Kupplungselement auf. Diese beiden Kupplungselemente gehen im eingekuppelten Zustand eine reibschlüssige Verbindung ein, und sorgen dafür, daß eine von dem Antriebsmotor verursachte Drehbewegung auf die entsprechenden Abtriebsteile weitergeleitet wird. Um diese Übertragung der Drehbewegung zu gewährleisten, sind in die ersten Kupplungselemente in vorteilhafter Weise zweite Abtriebsteile integriert, die mit dem ersten Abtriebsteil des Antriebsmotors in Verbindung stehen.

Zur Verbindung eignet sich ein Zahnriemen, denkbar ist aber auch jede Form von Verbindungsketten oder direkte Verbindungsformen beispielsweise mit Zahnrädern.

Das Einkuppeln der zweiten Kupplungselemente in die sich drehenden ersten Kupplungselemente der mindestens zwei Kupplungen mit Hilfe der Kupplungsbetätigungswelle ermöglicht eine kraftschlüssige Verbindung, die auf jeweils dritte Abtriebsteile der zweiten Kupplungselemente weitergeleitet wird.

Diese jeweils dritten Abtriebsteile können beispielsweise Innenvierkante aufweisen, die sich in hervorragender Weise dazu eignen, beispielsweise flexible Wellen (Flexwellen) aufzunehmen, um die anliegenden Drehmomente an die jeweiligen Einrichtungsteile weiterzuleiten.

Ein weiterer entscheidender Vorteil ergibt sich, wenn die mindestens zwei Kupplungen im wesentlichen auf einer Linie liegen. Nicht nur, daß sich dadurch die verschiedenen Kupplungen über eine einzige Betätigungswelle bedienen lassen, durch diese Anordnung der Abtriebe läßt sich die Antriebsvorrichtung auch in vorhandene Sitzstrukturen integrieren und macht entsprechende Neuentwicklungen überflüssig.

Vorteilhaft ist ferner, wenn die jeweils zweiten Abtriebsteile unterschiedliche Durchmesser aufweisen. Damit läßt sich die Untersetzung des Antriebs variieren, und man erreicht weiterhin eine Abstimmungs- und Anpassungsmöglichkeit an die verschiedenen, zu verstellenden Einrichtungsteile. Beispielsweise wird die Längs- bzw. Höhenverstellung eines Kraftfahrzeugsitzes mehr Kraftaufwand erfordern, als beispielsweise die Neigungsverstellung einer Rückenlehne.

Generell kann auch die Untersetzung so gewählt werden, daß beispielsweise die Flexwellen, mit denen Drehmomente auf die einzelnen Einrichtungsteile übertragen werden, sich relativ langsam drehen, und somit Geräuschprobleme von vornherein minimiert werden.

Die dritten Abtriebsteile der jeweils zweiten Kupplungselemente können natürlich auch Zahnräder oder ähnliche Teile, die zur Weiterleitung eines Drehmoments geeignet sind, umfassen.

### Zeichnung

In der Zeichnung ist ein Ausführungsbeispiel einer erfindungsgemäßen Antriebsvorrichtung dargestellt und in der nachfolgenden Beschreibung näher erläutert.
Figur 1 zeigt das Ausführungsbeispiel im Schnitt mit einer Anbindung an einen Kraftfahrzeugsitz,
Figur 2 zeigt den Bereich der Kupplungen in vergrößerter Darstellung und
Figur 3 zeigt das Ausführungsbeispiel ebenfalls im Schnitt in einer Ansicht in Richtung des Pfeiles A aus Figur 1.

### Beschreibung des Ausführungsbeispiels

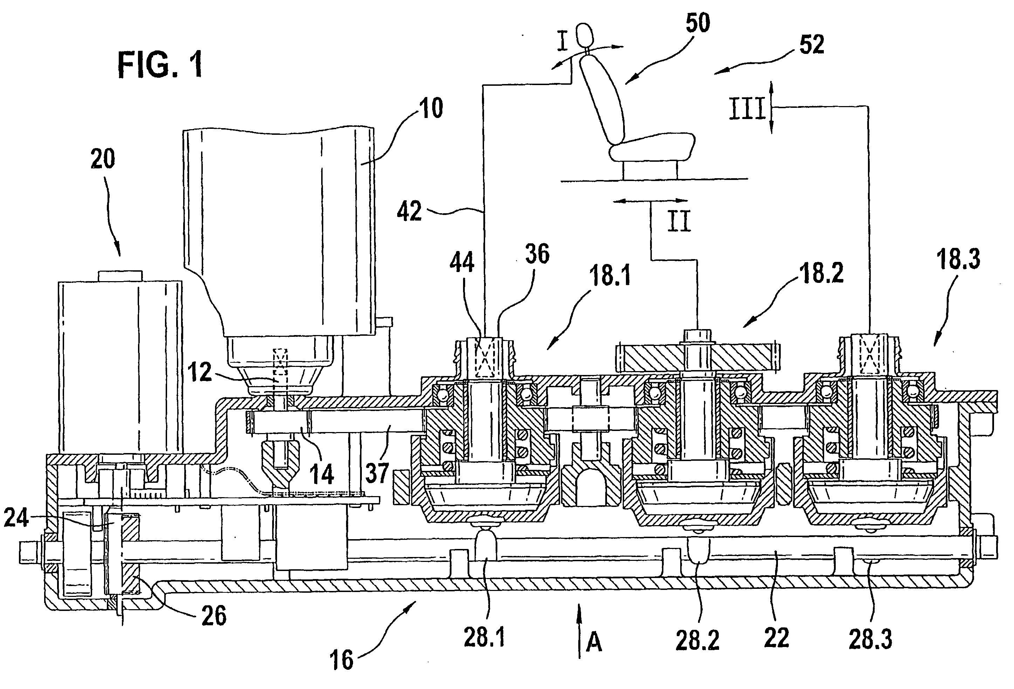

Die in Figur 1 dargestellte Antriebsvorrichtung zum Verstellen von zu einem Kraftfahrzeug gehörenden Einrichtungsteilen weist einen elektrischen Antriebsmotor 10 mit einem an einer Welle 12 angeordneten ersten Abtriebsteil 14 auf.

Der Antriebsmotor 10 treibt eine Abtriebseinheit 16 an, die drei Kupplungen 18.1, 18.2 und 18.3, einen Kupplungsaktuator 20 sowie eine Kupplungsbetätigungswelle 22 aufweist.

Der Kupplungsaktuator 20 ist in diesem Ausführungsbeispiel ein Elektromotor, der über ein Schneckengetriebe bestehend aus einer Schnecke 24 und einem Schneckenrad 26 an die Betätigungswelle 22 angebunden ist. Im Betrieb wird die Drehbewegung des Kupplungsaktuators 20 über das Schneckengetriebe auf die Betätigungswelle 22 übertragen, wodurch auch die Nocken 28.1 bis 28.3, die jeweils um 120° zueinander versetzt auf der Betätigungswelle 22 angeordnet sind, in eine Drehbewegung versetzt werden. Je nach Stellung der Betätigungswelle 22 wird eine der drei Kupplungen 18.1 bis 18.3 betätigt.

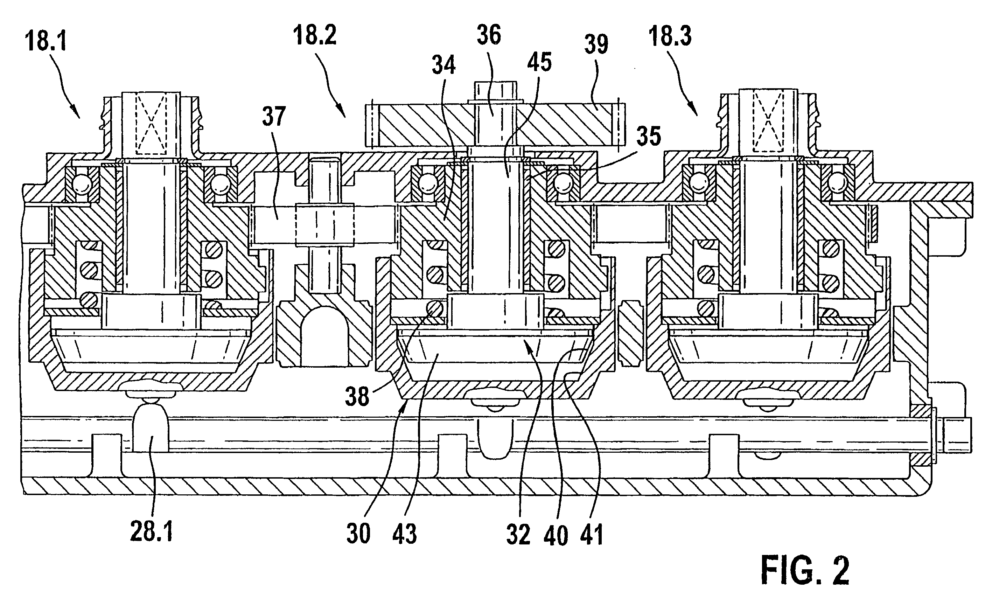

Die Details der Kupplungen 18.1 bis 18.3 sind in Figur 2 dargestellt, wobei der Einfachheit und der besseren Übersichtlichkeit halber nur die mittlere der drei Kupplungen 18.2 beschrieben wird und gleiche Merkmale mit gleichen Bezugszeichen versehen sind. Da die Kupplungen im wesentlichen identisch sind, sollte dies zum Verständnis der Erfindung ausreichen.

Die Kupplungen 18.1 bis 18.3 weisen jeweils ein erstes Kupplungselement 30 sowie ein zweites Kupplungselement 32 auf.

In die jeweils ersten Kupplungselemente 30 sind zweite Abtriebsteile 34 integriert, die miteinander sowie mit dem ersten Abtriebsteil 14 des elektrischen Antriebsmotors 10 über einen Zahnriemen 36 verbunden sind (Figur 1). Sie sind drehbar auf Kalottenlagern 35 gelagert, so daß die ersten Kupplungselemente 30 während des Betriebs des elektrischen Antriebsmotors 10 über den Zahnriemen 36 antreibbar sind und in eine Drehbewegung versetzt werden können.

Die jeweils zweiten Kupplungselemente 32 weisen pilzförmige Ansätze 43 auf, die an Lagerzapfen 45 zur zentrischen Lagerung der zweiten Kupplungselemente 32 in zentrischen Öffnungen der ersten Kupplungselemente 30 angeformt sind. Die jeweils anderen Enden der Lagerzapfen 45 weisen dritte Abtriebsteile 36 auf, die letztlich das vom Antriebsmotor 10 bereitgestellte Drehmoment auf die zu verstellenden Teile des Sitzes 50 übertragen.

Die Übertragung der Drehbewegung des Antriebsmotors 10 über die zweiten Abtriebsteile 34 der ersten Kupplungselemente 30 auf die dritten Abtriebsteile 36 der zweiten Kupplungselemente 32 erfolgt, wenn die zweiten Kupplungselemente 32 in reibschlüssiger Verbindung mit den ersten Kupplungselementen 30 stehen.

Diese Verbindung wird durch die Nocken 28.1 bis 28.3 der Betätigungswelle 22 hergestellt, wobei je nach Stellung der Nocken 28.1 bis 28.3 wahlweise eine Innenfläche 41 eines der ersten Kupplungselemente 30 gegen die Kraft jeweils einer elastischen Feder 38 gegen die Reibflächen 40 des pilzförmigen Ansatzes 43 der zweiten Kupplungselemente 32 gedrückt wird. Die Innenfläche 41 und die Reibfläche 40 sind konzentrisch zur Achse des jeweiligen zweiten Kupplungselementes 32 ausgebildet. Sie bilden jeweils die Oberflächen von Kegelstümpfen, wodurch das maximal zu übertragende Drehmoment vergrößert bzw. die benötigte Kupplungskraft verringert werden kann.

Im dargestellten Ausführungsbeispiel der Figuren 1 und 2 betätigt die Nocke 28.1 die erste Kupplung 18.1 wobei das vom Antriebsmotor 10 hervorgerufene Drehmoment über das dritte Abtriebsteil 36 des zweiten Kupplungselements 32 übertragen wird, um eine Neigungsverstellung einer Lehne 50 eines Kraftfahrzeugsitzes 52 in Richtung des Pfeiles I durchzuführen. Die Drehmomentübertragung erfolgt bei der ersten Kupplung 18.1 über eine Flexwelle 42, die in einen Innenvierkant 44 des dritten Abtriebsteils 36 ragt.

Die weiteren Abtriebsteile 36 der Kupplungen 18.2 und 18.3 sind mit weiteren Sitzkomponenten verbunden und ermöglichen die Längsverstellung des Fahrzeugsitzes 52 in Richtung des Pfeiles II bzw. die Höhenverstellung des Fahrzeugsitzes 52 in Richtung des Pfeiles III.

An das dritte Abtriebsteil 36 der zweiten Kupplung 18.2 ist zusätzlich ein Zahnrad 39 angebunden, das bei entsprechender Gestaltung der Sitzverstellmechanik zusätzlich zu den Flexwellen 42 zur Übertragung der Drehmomente einsetzbar ist.

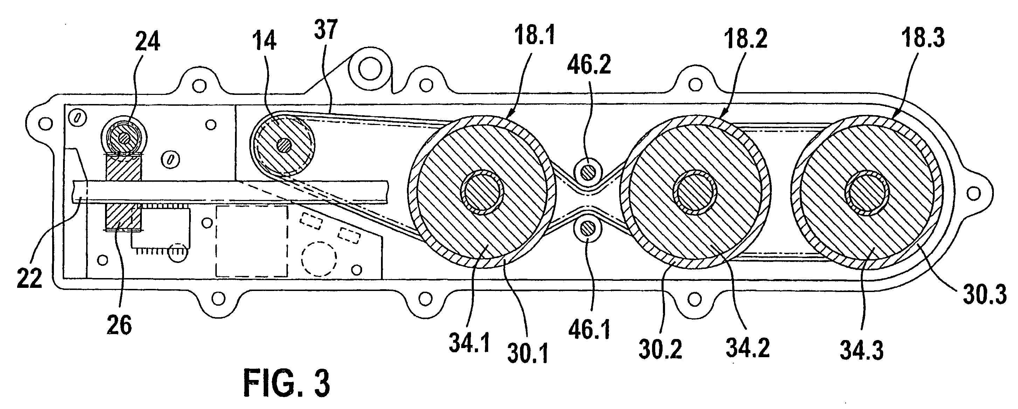

In Figur 3 ist das Ausführungsbeispiel aus Figur 1 in der Ansicht in Richtung des Pfeiles A aus Figur 1 dargestellt. Auch hier sind gleiche Merkmale mit gleichen Bezugszeichen versehen.

In Figur 3 ist deutlich die Schneckenwelle 24 des elektrischen Kupplungsaktuators 20 zu sehen, die im Eingriff mit dem Schneckenrad 26 der Kupplungsbetätigungswelle 22 steht. Weiterhin dargestellt ist das erste Abtriebsteil 14 des elektrischen Antriebsmotors 10, sowie die Kupplungen 18.1 bis 18.3.

Ebenfalls gezeigt ist der Verlauf des Zahnriemens 36, der die zweiten Abtriebsteile 34.1 bis 34.3 der jeweils ersten Kupplungselemente 30.1 bis 30.3 sowie das erste Abtriebsteil 14 miteinander verbindet. Zusätzlich dargestellt sind zwei Spannrollen 46.1 und 46.2, die zum einen zum Spannen des Zahnriemens 36 dienen und zum anderen den Zahnriemen 36 über einen größeren Umfangsbereich der Abtriebsteile 34.1 und 34.2 anlegen.

Die Erfindung ist natürlich nicht auf das eben beschriebene Ausführungsbeispiel beschränkt, entscheidend ist, daß lediglich ein Kupplungsaktuator zum Betätigen mehrerer Kupplungen vorhanden ist.

## Patentansprüche

1. Antriebsvorrichtung zum Verstellen von zu einem Kraftfahrzeug gehörenden Einrichtungsteilen, insbesondere von Teilen eines Kraftfahrzeugsitzes, mit nur einem elektrischen Antriebsmotor (10), der ein erstes Abtriebsteil (14) aufweist, und mit einer davon angetriebenen Abtriebseinheit (16) mit mindestens zwei Kupplungen (18),
wobei die Abtriebseinheit (16) einen Kupplungsaktuator (20) zum wahlweisen Betätigen der mindestens zwei Kupplungen (18.1, 18.2, 18.3) aufweist, **dadurch gekennzeichnet, dass**
die Abtriebseinheit (16) eine mit dem Kupplungsaktuator (20) und den mindestens zwei Kupplungen (18.1, 18.2, 18.3) zusammenwirkende Kupplungsbetätigungswelle (22) zum wahlweisen Betätigen der mindestens zwei Kupplungen (18.1, 18.2, 18.3) aufweist und
die Kupplungsbetätigungswelle (22) Nocken (28) zum wahlweisen Betätigen der mindestens zwei Kupplungen (18.1, 18.2, 18.3) aufweist.

2. Antriebsvorrichtung nach Anspruch 1, **dadurch gekennzeichnet, dass** die mindestens zwei Kupplungen (18.1, 18.2, 18.3) jeweils ein erstes Kupplungselement (30) und jeweils ein zweites Kupplungselement (32) aufweisen.

3. Antriebsvorrichtung nach Anspruch 2, **dadurch gekennzeichnet, daß** in die jeweils ersten Kupplungselemente (30) jeweils zweite Abtriebsteile (34) integriert sind.

4. Antriebsvorrichtung nach Anspruch 3, **dadurch gekennzeichnet, daß** das erste Abtriebsteil (14) des Antriebsmotors (10) mit den zweiten Abtriebsteilen (34) der jeweils ersten Kupplungselemente (30) in Verbindung steht.

5. Antriebsvorrichtung nach Anspruch 4, **dadurch gekennzeichnet, daß** die Verbindung über mindestens einen Zahnriemen (37) erfolgt.

6. Antriebsvorrichtung nach einem der Ansprüche 2 bis 5, **dadurch gekennzeichnet, daß** die zweiten Kupplungselemente (32) dritte Abtriebsteile (36) zum Verstellen der Einrichtungsteile aufweisen.

7. Antriebsvorrichtung nach Anspruch 6, **dadurch gekennzeichnet, daß** die dritten Abtriebsteile (36) Innenvierkante (44) zur Aufnahme von Flexwellen (42) aufweisen.

8. Antriebsvorrichtung nach einem der vorhergehenden Ansprüche, **dadurch gekennzeichnet, daß** die mindestens zwei Kupplungen (18) im wesentlichen auf einer Linie liegen.

9. Antriebsvorrichtung nach einem der Ansprüche 3 bis 7, **dadurch gekennzeichnet, daß** die jeweils zweiten Abtriebsteile (34) unterschiedliche Durchmesser aufweisen.

## Claims

1. Driving device for adjusting device parts belonging to a motor vehicle, in particular parts of a motor vehicle seat, having just one electric driving motor (10) which has a first driven part (14), and having a driven unit (16) which is driven by it and has at least two clutches (18),
the driven unit (16) having a clutch actuator (20) for optionally actuating the at least two clutches (18.1, 18.2, 18.3), **characterized in that**
the driven unit (16) has a clutch actuation shaft (22) which interacts with the clutch actuator (20) and the at least two clutches (18.1, 18.2, 18.3) and is intended for optionally actuating the at least two clutches (18.1, 18.2, 18.3), and
the clutch actuation shaft (22) has cams (28) for optionally actuating the at least two clutches (18.1, 18.2, 18.3).

2. Driving device according to Claim 1, **characterized in that** the at least two clutches (18.1, 18.2, 18.3) in each case have a first clutch element (30) and in each case a second clutch element (32).

3. Driving device according to Claim 2, **characterized in that** second driven parts (34) are integrated in each case in the first clutch elements (30) in each case.

4. Driving device according to Claim 3, **characterized in that** the first driven part (14) of the driving motor (10) is connected to the second driven parts (34) of the first clutch elements (30) in each case.

5. Driving device according to Claim 4, **characterized in that** the connection takes place via at least one toothed belt (37).

6. Driving device according to one of Claims 2 to 5, **characterized in that** the second clutch elements (32) have third driven parts (36) for adjusting the device parts.

7. Driving device according to Claim 6, **characterized in that** the third driven parts (36) have a square socket (44) for receiving flexible shafts (42).

8. Driving device according to one of preceding claims, **characterized in that** the at least two clutches (18) lie essentially in a line.

9. Driving device according to one of Claims 3 to 7, **characterized in that** the second driven parts (34) in each case have different diameters.

## Revendications

1. Dispositif d'entraînement pour déplacer des éléments d'unités faisant partie d'un véhicule automobile, en particulier des éléments d'un siège de véhicule automobile, avec seulement un moteur d'entraînement électrique (10) qui présente un premier élément récepteur ( 14) , et avec une unité réceptrice (16) entraînée par celui-ci avec au moins deux accouplements (18), l'unité réceptrice (16) présentant un actionneur d'accouplements (20) pour actionner de manière sélective les au moins deux accouplements (18.1, 18.2, 18.3),
**caractérisé en ce que**
l'unité réceptrice (16) présente un arbre d'actionnement d'accouplements (22) coopérant avec l'actionneur d'accouplements (20) et les au moins deux accouplements (18.1, 18.2, 18.3) pour actionner de manière sélective les au moins deux accouplements (18.1, 18.2, 18.3), et
l'arbre d'actionnement d'accouplements (22) présente des cames (28) pour actionner de manière sélective les au moins deux accouplements (18.1, 18.2, 18.3).

2. Dispositif d'entraînement selon la revendication 1,
**caractérisé en ce que**
les au moins deux accouplements (18.1, 18.2, 18.3) présentent chacun un premier élément d'accouplement (30) et chacun un deuxième élément d'accouplement (32).

3. Dispositif d'entraînement selon la revendication 2,
**caractérisé en ce que**
dans chacun des premiers éléments d'accouplement (30) sont intégrés deux éléments récepteurs (34).

4. Dispositif d'entraînement selon la revendication 3,
**caractérisé en ce que**
le premier élément récepteur (14) du moteur d'entraînement (10) est en liaison avec deux éléments récepteurs (34) de chacun des premiers éléments d'accouplement (30).

5. Dispositif d'entraînement selon la revendication 4,
**caractérisé en ce que**
la liaison se fait par au moins une courroie crantée (37).

6. Dispositif d'entraînement selon une des revendications 2 à 5,
**caractérisé en ce que**
les deuxièmes éléments d'accouplement (32) présentent des troisièmes éléments récepteurs (36) pour déplacer les éléments d'unités.

7. Dispositif d'entraînement selon la revendication 6,
**caractérisé en ce que**
les troisièmes éléments récepteurs (36) présentent des carrés conducteurs femelles (44) pour recevoir des arbres flexibles (42).

8. Dispositif d'entraînement selon une des revendications précédentes,
**caractérisé en ce que**
les au moins deux accouplements (18) sont disposés sensiblement sur une ligne.

9. Dispositif d'entraînement selon une des revendications 3 à 7,
**caractérisé en ce que**
les deuxièmes éléments récepteurs (34) présentent chacun des diamètres différents.
